# EUROPÄISCHE PATENTSCHRIFT

(11) **EP 1 297 684 B1**
(45) Veröffentlichungstag und Bekanntmachung des Hinweises auf die Patenterteilung: **12.10.2005**
(21) Anmeldenummer: 01913813.0
(22) Anmeldetag: 10.02.2001
(51) Int. Cl.: H04N 5/00

(54) **VORRICHTUNG ZUM EMPFANG VON DIGITALEN RUNDFUNKSIGNALEN**
DEVICE FOR RECEIVING DIGITAL RADIO SIGNALS
DISPOSITIF DE RECEPTION DE SIGNAUX RADIOELECTRIQUES NUMERIQUES

(30) Priorität: 19.02.2000 DE 10007710
(43) Veröffentlichungstag der Anmeldung: 02.04.2003
(73) Patentinhaber: Grundig Multimedia B.V., 1083HJ Amsterdam (NL)
(72) Erfinder: HORN, Bernhard, 91301 Forchheim (DE)
(74) Vertreter: Pröll, Jürgen
(86) Internationale Anmeldenummer: PCT/EP2001/001490
(87) Internationale Veröffentlichungsnummer: WO 2001/061991

(56) Entgegenhaltungen:
- EP-A- 0 849 948
- WO-A-99/21309

## Beschreibung

Die Erfindung betrifft eine Vorrichtung zum Empfang von digitalen Rundfunksignalen.

Es sind bereits sogenannte Settop-Boxen bekannt, die zum Empfang von analogen und/oder digitalen Satelliten-Rundfunksignalen vorgesehen sind. Derartige Settop-Boxen werden üblicherweise in Form eines eigenständigen Gerätes realisiert und zwischen die Außeneinheit einer Satelliten-Empfangsanlage und einen herkömmlichen Fernsehempfänger geschaltet. In einer derartigen Settop-Box erfolgt eine Umsetzung der von der Außeneinheit der Satelliten-Empfangsanlage abgeleiteten Signale in Signale, die einem herkömmlichen Fernsehempfänger über dessen HF-Eingang oder über dessen Euro-AV-Buchse zugeführt werden.

Es ist weiterhin bereits bekannt, die Baugruppen einer Settop-Box in Form eines Moduls zu realisieren und dieses Modul in das Gehäuse eines Fernsehempfängers zu integrieren.

Über Rundfunksatelliten übertragene digitale Rundfunksignale können neben digitalen Audio- und Videodaten auch digitale Teletextdaten und andere digitale Daten enthalten, die mittels eines digitalen Empfangsgerätes empfangbar sein sollen. Weiterhin ist es auch wünschenswert, mittels eines digitalen Empfangsgerätes Zugriff auf Internetdaten und/oder andere Datendienste zu haben. Will man mittels eines einzigen digitalen Empfangsgerätes eine Vielzahl von verschiedenartigen digitalen Daten empfangen und verarbeiten können, muß man in Kauf nehmen, daß die Herstellungs- und damit auch die Endverkaufspreise für digitale Empfangsgeräte hoch sind. Weiterhin sind derartige digitale Empfangsgeräte in ihrem Aufbau kompliziert, so daß an den Geräteentwickler hohe Anforderungen gestellt sind. Weiterhin wird in der Praxis von den meisten Käufern eines derartigen digitalen Empfangsgerätes eine Vielzahl der Funktionen des Gerätes niemals genutzt. Dennoch müssen auch diese Gerätekäufer die genannten hohen Preise für die digitalen Empfangsgeräte bezahlen.

Aus EP-A2-0 849 948 ist eine Fernbedienung für ein Fernsehkabelnetzsystem bekannt. Dieses System nutzt eine Set-Top-Box, welche mit einem Tuner, einem Demodulator und einem Mikrocomputer ausgestattet ist.

Der Erfindung liegt die Aufgabe zugrunde, eine Vorrichtung zum Empfang von digitalen Rundfunksignalen anzugeben, die die vorstehend beschriebenen Nachteile nicht aufweist.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß der Herstellungs- und damit auch der Endverkaufspreis eines digitalen Empfangsgerätes niedrig ist. Lediglich Benutzer, die den Wunsch haben, spezielle Zusatzfunktionen durchführen zu können, haben höhere Kosten. Diese werden durch den Kauf eines oder mehrerer Zusatzmodule verursacht, welches bzw. welche eine Signalverarbeitungseinheit zur Durchführung der gewünschten speziellen Zusatzfunktionen haben.

Ein weiterer Vorteil der Erfindung besteht darin, daß ein digitales Empfangsgerät gemäß der Erfindung zukunftssicher ist. Treten im Laufe der Lebensdauer eines derartigen Gerätes Empfangssignale mit neuen Codierungen auf, dann kann diesem Umstand in einfacher Weise dadurch Rechnung getragen werden, daß der Kunde ein neues, vergleichsweises preisgünstiges Zusatzmodul erwirbt, welches zur Decodierung der Empfangssignale mit neuer Codierung geeignet ist. Es besteht sogar die Möglichkeit, ein in das digitale Empfangsgerät eingesetztes Zusatzmodul unter Verwendung von im empfangenen digitalen Datenstrom enthaltenen Softwareprogrammen derart zu programmieren, daß es zum Empfang und zur Verarbeitung der Empfangssignale mit der neuen Codierung geeignet ist.

Sieht man - wie es in den abhängigen Ansprüchen angegeben ist - am Zusatzmodul weitere Ausgänge vor, dann ist es nicht notwendig, derartige weitere Ausgänge am digitalen Empfangsgerät selbst vorzusehen.

Die abhängigen Ansprüche haben ausserdem bevorzugte Realisierungen der im Zusatzmodul enthaltenen Signalverarbeitungseinheit zum Gegenstand.

Weist das Zusatzmodul einen Fembedienempfänger auf, wie es im.Anspruch 12 angegeben ist, dann können in vorteilhafter Weise Bedienbefehle, die mittels der Bedieneinheit des Zusatzmoduls eingegeben werden, über den Mikrocomputer des Zusatzmoduls an den Mikrocomputer des digitalen Empfangsgerätes weitergeleitet werden. Dieser führt dann Steuervorgänge aus, die durch die Bedieneinheit des Zusatzmoduls vorgegeben sind.

Mittels einer Vorrichtung mit den im Anspruch 12 angegebenen Merkmalen wird es möglich, unter Verwendung einer fremden Fembedienung Bedienbefehle einzugeben, die automatisch in Daten umgesetzt werden, die vom Mikrocomputer des digitalen Empfangsgerätes verstanden werden. Dieser erzeugt dann Steuerdaten für die jeweils betroffene Baugruppe der Vorrichtung.

Die Vorteile der im Anspruch 14 angegebenen Merkmale bestehen darin, daß sowohl die Möglichkeit besteht, vom digitalen Empfangsgerät über einen seiner Eingänge empfangene Signale auf einen Datenträger aufzuzeichnen, als auch die Möglichkeit besteht, von einem Datenträger gelesene Signale zu verarbeiten und/oder auf dem Bildschirm eines an das digitale Empfangsgerät angeschlossenen Fernsehempfänger darzustellen.

Vorzugsweise ist das digitale Empfangsgerät zur Aufnahme verschiedenartiger Datenträger vorgesehen, so daß beispielsweise auf Wunsch des Benutzers eine Aufzeichnung von empfangenen Audiosignalen erfolgen kann, die im Zusatzmodul 12 verarbeitet und von dort aus an das digitale Empfangsgerät zurück übertragen werden. Weiterhin kann auf Wunsch des Benutzers ein Lesen und Anzeigen von auf einer CD-ROM aufgezeichneten Daten erfolgen, wobei diese Daten beispielsweise dem Katalog eines Versandhauses, Telefonbuchdaten oder auch Landschaftsbeschreibungen entsprechen können. Handelt es sich beim Datenträger um eine MP3-Speicherkarte, dann können dort abgespeicherte Signale gelesen, decodiert und in Form von Tonsignalen über Lautsprecher abgestrahlt werden. Femer können empfangene Musiksignale mit einer MP3-Codierung versehen und auf der MP3-Speicherkarte abgespeichert werden.

Ist das digitale Empfangsgerät mit einer Telefonschnittstelle versehen, dann können von einer CD-ROM gelesene Katalog- bzw. Produktdaten direkt dazu verwendet werden, über das Telefon eine Bestellung an ein Versandhaus aufzugeben. Vorzugsweise sind in diesem Fall in einem Speicher des digitalen Empfangsgerätes oder des Zusatzmoduls bereits den Nutzer identifizierende persönliche Daten abgespeichert, die dann automatisch zusammen mit den Produktdaten an das Versandhaus übermittelt werden.

Hat das Zusatzmodul, wie es im Anspruch 18 angegeben ist, einen weiteren Dateneingang, dann können auch Audio-, Video- oder Steuerdaten, die nicht vom HF-Eingang des digitalen Empfangsgerätes abgeleitet sind, verarbeitet und wiedergegeben werden.

Die Auswahl der im Zusatzmodul zu verarbeitenden Signale kann entweder direkt über eine dem Zusatzmodul zugeordnete Bedieneinheit erfolgen oder durch Steuerdaten, die mittels der Bedieneinheit des digitalen Empfangsgerätes eingegeben wurden und vom Mikrocomputer des digitalen Empfangsgerätes an den Mikrocomputer des Zusatzmoduls übertragen werden.

Alternativ oder zusätzlich zu der Möglichkeit, im digitalen Empfangsgerät eine Aufnahmevorrichtung für einen Datenträger vorzusehen, kann eine derartige Aufnahmevorrichtung für einen Datenträger auch im Zusatzmodul vorgesehen sein.

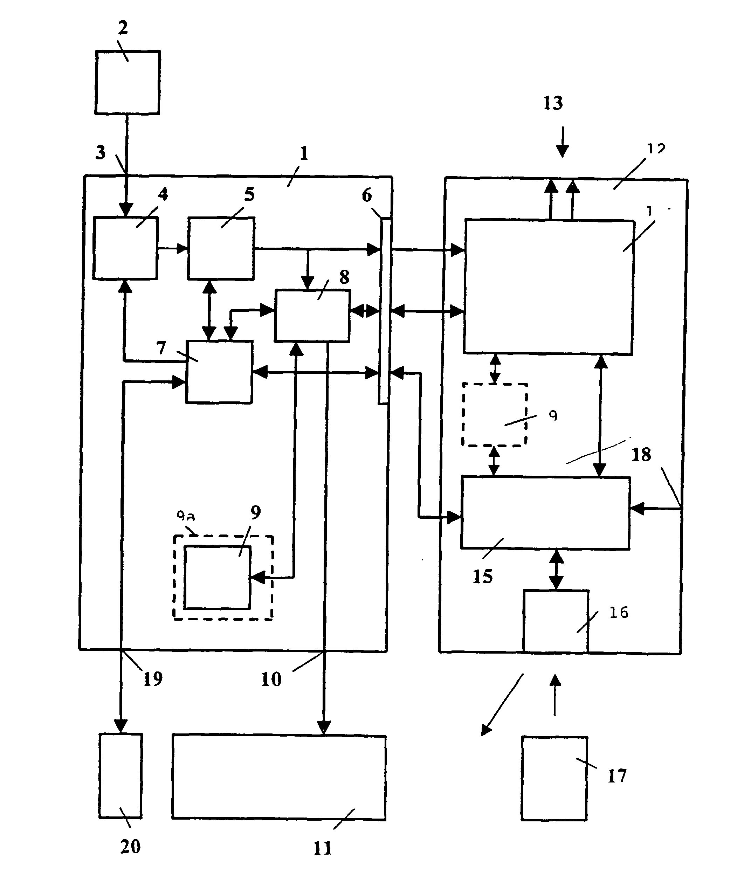

Weitere vorteilhafte Eigenschaften der Erfindung ergeben sich aus der Erläuterung eines Ausführungsbeispiels anhand der Figur, die ein Blockschaltbild einer Vorrichtung zum Empfang von digitalen Rundfunksignalen zeigt.

Die gezeigte Vorrichtung weist eine Satellitenempfangsantenne 2 auf, deren Ausgangssignale einem digitalen Empfangsgerät über dessen Eingangsanschluß 3 zugeführt werden: Das digitale Empfangsgerät 1 ist über seine Telefonschnittstelle 19 mit einem Telefon 20 verbunden. Die Telefonschnittstelle 19 kann als Modemschnittstelle, DECT-Schnittstelle, Funkschnittstelle, Infrarotschnittstelle oder Telefonkabelanschlußschnittstelle ausgestaltet sein. Zur Wiedergabe von Signalen, die vom digitalen Empfangsgerät empfangen werden, ist ein an den Ausgang 10 des digitalen Empfangsgerätes angeschlossener Fernsehempfänger 11 vorgesehen. Weiterhin steht das digitale Empfangsgerät 1 über eine Geräteschnittstelle 6 mit einem Zusatzmodul 12 in Verbindung. Diesem ist unter anderem ein Fembedienungsgeber 17 zur Eingabe von Bedienbefehlen zugeordnet.

Die gezeigte Vorrichtung ist in verschiedenen Betriebsarten betreibbar.

In einer ersten Betriebsart werden von der Satellitenantenne 2 abgeleitete Signale dem digitalen Empfangsgerät 1, bei welchem es sich um eine Settop-Box handelt, über deren Eingangsanschluß 3 zugeleitet. Von dort aus werden sie über den Tuner 4 einem Demodulator 5 zugeführt. Dieser stellt an seinem Ausgang digitale Daten in Form eines MPEG-Transportstroms zur Verfügung. Dieser Transportstrom enthält einen Multiplex von mehreren Services. Ein Service kann ein oder mehrere Fernsehprogramme, ein oder mehrere Radioprogramme, Zusatzdaten zu den Radio- bzw. Fernsehprogramme wie Teletextdaten, mehrsprachige Audiodaten, eine Programmzeitschrift und Untertiteldaten enthalten. Weiterhin kann ein Service auch Datendienste oder Programme im EDV-Sinne enthalten.

Dieser MPEG-Transportstrom wird einer Signalverarbeitungsschaltung 8 zugeführt, in welcher die Selektion eines gewünschten Services bzw. eines dem Service entsprechenden Unterdatenstromes erfolgt. Weiterhin erfolgt in der Signalverarbeitungsschaltung 8 eine Umwandlung des selektierten Datenstromes in Signale, die über den Ausgang 10 einem angeschlossenen Fernsehempfänger oder Audiowiedergabegerät zugeführt werden, wo sie auf dem Bildschirm dargestellt bzw. über Lautsprecher wiedergegeben werden.

Die Steuerung des Tuners 4, des Demodulators 5 und der Signalverarbeitungsschaltung 8 erfolgt durch Steuersignale, die im Mikrocomputer 7 der Settop-Box generiert werden. Der Mikrocomputer 7 erzeugt die genannten Steuersignale in Abhängigkeit von Bedienbefehlen, die entweder mittels einer nicht gezeichneten Bedieneinheit der Settop-Box eingegeben werden oder mittels einer Bedieneinheit 17, die dem Zusatzmodul 12 direkt zugeordnet ist.

Die mittels der Bedieneinheit 17 eingegebenen Bedienbefehle werden dabei von der Einheit 16, die einen Fembedienempfänger aufweist, empfangen und über den Mikrocomputer 15 des Zusatzmoduls sowie die Schnittstelle 6 an den Mikrocomputer 7 der Settop-Box 1 weitergeleitet. Die Einheit 16 kann in vorteilhafter Weise einen Codewandler für Fernbedienbefehle aufweisen, in welchem eine Umsetzung der vom Fernbediengeber 17 ausgestrahlten Bedienbefehle in einen Fembediencode erfolgen kann, der vom Mikrocomputer 7 der Settop-Box verstanden wird.

In einer weiteren Betriebsart der gezeigten Vorrichtung werden von der Satellitenantenne 2 abgeleitete Signale dem digitalen Empfangsgerät 1, bei welchem es sich um eine Settop-Box handelt, über deren Eingangsanschluß 3 zugeführt. Von dort aus werden sie über den Tuner 4 dem Demodulator 5 zugeführt. Dieser stellt an seinem Ausgang digitale Daten in Form eines MPEG-Transportstroms zur Verfügung, der wie bereits oben ausgeführt wurde, einen Multiplex von mehreren Services aufweist. Einer dieser Services enthält digitale Audiosignale, die Raumklang- Audiodaten enthalten, die mehr als die üblichen 2-Kanal-Stereodaten umfassen. Derartige Raumklang-Audiodaten können beispielsweise Dolby-Surround-Audiodaten oder AC3-codierte Audiodaten sein.

Die Settop-Box 1 ist selbst nicht dazu in der Lage, derartige Raumklang-Audiodaten zu decodieren. Folglich werden diese im MPEG-Transportstrom enthaltenen Daten über die Geräteschnittstelle 6 dem Zusatzmodul 12 zugeführt. Dieses weist eine Signalverarbeitungseinheit 14 auf, in welcher ein Decoder für Raumklang-Audiodaten vorgesehen ist, beispielsweise ein Dolby-Surround-Decoder oder ein AC3-Decoder.

Die decodierten Audio-Raumklangdaten werden an zwei Signalausgänge 13 des Zusatzmoduls 12 weitergeleitet, bei denen es sich um Signalausgänge für digitale Audiosignale handelt.

Zusätzlich oder alternativ dazu kann die Signalverarbeitungseinheit 14 auch eine Schaltung aufweisen, die die decodierten digitalen Audiosignale in sechs analoge Audiosignale umsetzt, die jeweils für einen Lautsprecher vorgesehen sind. Diese analogen Audiosignale werden jeweils an einem analogen Signalausgang des Zusatzmoduls zur Verfügung gestellt und von dort aus dem jeweiligen Lautsprecher zugeführt.

Folglich werden im Zusatzmodul 12 Audiodaten, die im MPEG-Transportstrom in einem vorgegebenen Raumklang-Audioformat oder in einem anderen speziellen Audiodatenformat vorliegen, aus dem MPEG-Transportstrom separiert und in Abhängigkeit vom vorliegenden Format in der Signalverarbeitungseinheit 14 decodiert. Die decodierten Signale können dann an Ausgängen des Zusatzmoduls zur Verfügung gestellt werden und/oder über die Geräteschnittstelle 6 an die Settop-Box zurückgeführt werden.

Zur Separation des genannten Unterdatenstromes müssen dem Zusatzmodul 12 die zugehörigen Kennungen des Unterdatenstromes mitgeteilt werden, so daß das Zusatzmodul diesen Unterdatenstrom selbsttätig extrahieren und decodieren kann. Die Kennungen können dabei entweder über Befehle der Bedieneinheit der Settop-Box oder des Zusatzmoduls vorgegeben werden. Alternativ dazu ist es auch möglich, den genannten Unterdatenstrom bereits in der Settop-Box zu separieren und dem Zusatzmodul gegebenenfalls vordecodierte Audiodaten über die Geräteschnittstelle 6 zuzuführen.

Ein wesentlicher Vorteil der beschriebenen Verwendung eines Zusatzmoduls zur Decodierung von Audiodaten, die in einem speziellen Datenformat vorliegen, besteht darin, daß die Grundkosten für die Settop-Box niedrig gehalten werden. Lediglich für Benutzer, die die genannten speziellen Daten auch decodieren möchten, entstehen zusätzliche Kosten durch den Kauf des beschriebenen Zusatzmoduls.

Unterschiedliche Raumklang-Audioformate oder andere unterschiedliche Audiodatenformate bzw. die jeweils zugehörigen Decoder können in unterschiedlichen Zusatzmodulen realisiert sein, ohne daß die Settop-Box die Eigenschaften des Zusatzmoduls kennen muß. Folglich ist ein derartiges System offen für zukünftige Audiodatenformate. In zukünftigen Empfangsgeräten können bereits vorhandene Zusatzmoduie weiterhin genutzt werden. Sie werden nicht unbrauchbar.

Die genannte Signalverarbeitungseinheit 14 kann beispielsweise auch einen Protokollwandler für Audiosignale enthalten, wobei die protokollgewandelten Audiodaten entweder an die Settop-Box 1 zurückgeführt oder an einem Ausgang des Zusatzmoduls 12 zur Verfügung gestellt werden..

Eine bevorzugte Ausführungsform besteht darin, an einem Ausgang des Zusatzmoduls 12 komprimierte Audiosignale, beispielsweise MP3-codierte Audiosignale zur Verfügung zu stellen. Diese können dann an einen externen Speicher weitergeleitet werden, der Bestandteil eines zugehörigen Abspielgerätes ist

Eine andere bevorzugte Ausführungsform der Erfindung besteht darin, in der Einheit 16 des Zusatzmoduls 12 einen Infrarotsender vorzusehen. Unter Verwendung dieses infrarotsenders können Audiosignale, die in der Settop-Box 1 oder in der Signalverarbeitungseinheit 14 verarbeitet wurden, drahtlos an nicht gezeichnete Lautsprecher übertragen und von diesen abgestrahlt werden.

In einer weiteren Betriebsart der genannten Vorrichtung ist ein derartiger Speicher 9, beispielsweise eine MP3-Speicherkarte, in eine Aufnahmevorrichtung 9a der Settop-Box 1 oder des Zusatzmoduls 12 eingesetzt. Diese Speicherkarte ist beschreibbar, so daß sowohl eine Abspeicherung von empfangenen Audiosignalen als auch eine Wiedergabe einer fremdbespielten Speicherkarte erfolgen kann.

Die Aufnahmevorrichtung 9a ist vorzugsweise so ausgebildet, daß sie zur Aufnahme verschiedenartiger Datenträger geeignet ist, beispielsweise einer CD-ROM, einer Audio-CD, einer DVD, einer MP3-Speicherkarte oder einer Halbleiterspeicherkarte. Dadurch ist die gezeigte Vorrichtung in flexibler Weise dazu in der Lage, eine Aufzeichnung und/oder Wiedergabe von Video-, Audio- und anderen Daten auf einen bzw. von einem Datenträger durchzuführen, wobei die aufzuzeichnenden Daten entweder vom Ausgang des Demodulators 5 oder vom Ausgang der Signalverarbeitungseinheit 14 abgeleitet sein können.

Handelt es sich bei dem genannten Datenträger um eine CD-ROM, auf welcher Daten abgespeichert sind, die dem Warenkatalog eines Versandhauses entsprechen, dann kann der Benutzer mittels der gezeigten Vorrichtung Bilder, Preisangaben und Zusatzinformationen zu den ihn interessierenden Artikeln abrufen und auf dem Bildschirm des Fernsehempfängers 11 betrachten. Weist die Settop-Box 1 eine Telefonschnittstelle 19 auf, dann können die auf dem Bildschirm dargestellten Daten zusammen mit den in einem Speicher der Settop-Box 1 oder des Zusatzmoduls 12 abgespeicherten Benutzeridentifikationsdaten dazu verwendet werden, über ein an die Settop-Box angeschlossenes Telefon 20 direkt eine Warenbestellung an das jeweilige Versandhaus abzusenden.

Handelt es sich beim genannten Datenträger um eine CD-ROM, auf welcher Daten abgespeichert sind, die einem Telefonbuch entsprechen, dann kann der Benutzer sich den Inhalt des Telefonbuchs abschnittsweise auf dem Bildschirm des Fernsehempfängers betrachten, um eine gewünschte Telefonnummer zu finden.

In einer weiteren Betriebsart der genannten Vorrichtung weist die Signalverarbeitungseinheit 14 einen Synthesizer auf. Mittels dieses Synthesizer ist es möglich, empfangene Audiodaten oder auch Audiobeschreibungsdaten mittels eines Syntheseverfahrens umzusetzen, um gewünschte Audioeffekte, Spiele oder multimediale Präsentationen zu generieren.

Für das Synthetisieren von Klängen existieren verschiedene Verfahren, in der Regel Datenreduktionsverfahren, die sich aufgrund der Struktur des Zieles von allgemeinen Reduktionsverfahren zur Übertragung von Audiosignalen beliebiger Audioquellen unterscheiden. So können beispielsweise über Internet oder über einen der im MPEG-Transportstrom enthaltenen Services nur noch der Typ des Klanges, z. B. Klavier, die Tonhöhe und einige dynamische Kennwerte wie laut, mittel, leise, lang oder kurz übertragen werden. Diese Informationen müssen dann mittels eines geeigneten Syntheseverfahrens zum Erzeugen der gewünschten Zieldaten umgesetzt werden.

Sind die genannten Daten im MPEG-Transportstrom enthalten, so werden sie in der Signalverarbeitungseinheit 14 aus dem MPEG-Transportstrom separiert und mittels des dort ebenfalls vorgesehenen Sythesizers in die genannten Zieldaten umgesetzt. Sind die genannten Daten hingegen aus dem Internet abgeleitet, so können sie entweder über die Telefonschnittstelle 19 der Settop-Box oder über einen Eingang 18 des Zusatzmoduls 12 der gezeigten Vorrichtung zugeführt werden und im Sythesizer der Signalverarbeitungseinheit 14 in gewünschter Weise verarbeitet werden.

Über den Eingang 18 des Zusatzmoduls 1 können der Vorrichtung auch beliebige andere Video-, Audio- oder Steuerdaten zugeführt werden, die in der Vorrichtung entweder in gewünschter Weise verarbeitet oder zur Steuerung bestimmter Baugruppen der Vorrichtung verwendet werden. Bei den der Vorrichtung über den Eingang 18 zugeführten Daten kann es sich auch um Softwaredaten handeln, mittels derer die Software eines der Mikrocomputer 7 oder 15 aktualisiert wird.

Bei dem beschriebenen Zusatzmodul 12 handelt es sich vorzugsweise um einen flachen, diskettenänhlichen Baustein, welcher durch einen Eingabeschlitz der Settop-Box in diese einsteckbar ist und welcher im eingesteckten Zustand mit der Geräteschnittstelle 6 kontaktiert ist. Dadurch ist es leicht möglich, Zusatzmodule in flexibler Weise mit unterschiedlichen Settop-Boxen zu verwenden.

Ein digitales Empfangsgerät gemäß der Erfindung muß keine Settop-Box sein. Es kann sich bei dem digitalen Empfangsgerät auch um einen digitalen Fernsehempfänger handeln, der die gezeigte Geräteschnittstelle 6 aufweist, über welche ein Zusatzmodul mit dem Empfänger verbindbar ist.

## Patentansprüche

1. Vorrichtung zum Empfang von digitalen Rundfunksignalen, mit einem digitalen Empfangsgerät (1), welches einen Tuner (4), einen an den Tuner (4) angeschlossenen Demodulator (5) und einen ersten Mikrocomputer (7) aufweist, wobei der Demodulator (5), der erste Mikrocomputer (7) über eine Geräteschnittstelle (6) des digitalen Empfangsgerätes (1) mit einem Zusatzmodul (12) verbunden sind, welches einen zweiten Mikrocomputer (15) aufweist, und das Zusatzmodul (12) mindestens einen weiteren Signalausgang (13,16) aufweist, über welchen im Zusatzmodul verarbeitete Signale ausgebbar sind,
**dadurch gekennzeichnet, daß**
das Zusatzmodul (12) eine vom zweiten Mikrocomputer (15) gesteuerte Signalverarbeitungseinheit (14) aufweist, welche ausgangsseitig mit der Geräteschnittstelle (6) verbunden ist und der erste Mikrocomputer (7) Steuerdaten generiert als Reaktion auf Bedienbefehle, die vom einem Fembedienempfänger (16) des Zusatzmoduls (12) abgeleitet und über einen Codewandler für Fernbediensignale zum ersten Mikrocomputer (7) geführt sind.

2. Vorrichtung nach Anspruch 1,
**dadurch gekennzeichnet, daß**
das Zusatzmodul (12) mehrere Signalausgänge aufweist.

3. Vorrichtung nach Anspruch 1 oder 2,
**dadurch gekennzeichnet, daß**
ein weiterer Signalausgang ein Ausgang (16) für Infrarotsignale ist.

4. Vorrichtung nach einem der vorhergehenden Ansprüche,
**dadurch gekennzeichnet, daß**
die Signalverarbeitungseinheit (14) eine Audiosignalverarbeitungseinheit vorweist.

5. Vorrichtung nach einem der vorhergehenden Ansprüche,
**dadurch gekennzeichnet, daß**
ein weiterer Signalausgang ein digitaler Audiosignalausgang ist.

6. Vorrichtung nach einem der vorhergehenden Ansprüche,
**dadurch gekennzeichnet, daß**
die Signalverarbeitungseinheit (14) einen Dolby-Surround-Decoder aufweist und das Zusatzmodul (12) zwei weitere Signalausgänge für digitale Audiosignale aufweist.

7. Vorrichtung nach einem der vorhergehenden Ansprüche,
**dadurch gekennzeichnet, daß**
die Signalverarbeitungseinheit (14) einen Dolby-Surround-Decoder aufweist und das Zusatzmodul (12) sechs weitere Signalausgänge für analoge Audiosignale aufweist.

8. Vorrichtung nach einem der vorhergehenden Ansprüche,
**dadurch gekennzeichnet, daß**
die Signalverarbeitungseinheit (14) einen Protokollwandler für Audiosignale aufweist.

9. Vorrichtung nach einem der vorhergehenden Ansprüche,
**dadurch gekennzeichnet, daß**
ein weiterer Ausgang ein Ausgang für komprimierte Audiosignale ist.

10. Vorrichtung nach einem der vorhergehenden Ansprüche,
**dadurch gekennzeichnet, daß**
ein weiterer Ausgang ein Ausgang für MP3-codierte Audiosignale ist.

11. Vorrichtung nach einem der vorhergehenden Ansprüche,
**dadurch gekennzeichnet, daß**
die Signalverarbeitungseinheit (14) einen Synthesizer aufweist.

12. Vorrichtung nach Anspruch 1,
**dadurch gekennzeichnet, daß**
das Zusatzmodul (12) einen Codewandler (16) für Fernbediensignale aufweist.

13. Vorrichtung nach einem der vorhergehenden Ansprüche,
**dadurch gekennzeichnet, daß**
das digitale Empfangsgerät (1) eine Aufnahmevorrichtung (9a) für einen Datenträger (9) aufweist.

14. Vorrichtung nach Anspruch 13,
**dadurch gekennzeichnet, daß**
der Datenträger (9) eine CD-ROM, eine Audio-CD, eine DVD, eine MP3-Speicherkarte oder eine Halbleiterspeicherkarte ist.

15. Vorrichtung nach Anspruch 13 oder 14,
**dadurch gekennzeichnet, daß**
der Datenträger (9) beschreibbar ist.

16. Vorrichtung nach einem der vorhergehenden Ansprüche,
**dadurch gekennzeichnet, daß**
das digitale Empfangsgerät (1) mit einer Telefonschnittstelle (19) versehen ist.

17. Vorrichtung nach einem der vorhergehenden Ansprüche,
**dadurch gekennzeichnet, daß**
die Telefonschnittstelle (19) eine Modemschnittstelle, eine DECT-Schnittstelle, Funkschnittstelle, eine Infrarotschnittstelle oder eine Telefonkabelanschlußschnittstelle ist.

18. Vorrichtung nach einem der vorhergehenden Ansprüche,
**dadurch gekennzeichnet, daß**
das Zusatzmodul (12) einen weiteren Dateneingang (18) aufweist.

19. Vorrichtung nach Anspruch 18,
**dadurch gekennzeichnet, daß**
der weitere Dateneingang (18) ein Steuersignaleingang ist.

20. Vorrichtung nach einem der vorhergehenden Ansprüche,
**dadurch gekennzeichnet, daß**
der Datenträger (9) zur Abspeicherung von Audio- und /oder Videosignalen vorgesehen ist, die vom Ausgang des Demodulators (5) oder vom Ausgang der Signalverarbeitungseinheit (14) abgeleitet sind.

21. Vorrichtung nach einem der vorhergehenden Ansprüche,
**dadurch gekennzeichnet, daß**
die am Ausgang des Demodulators (5) bereitgestellten Signale einem MPEG-Transportstrom entsprechen.

22. Vorrichtung nach Anspruch 21,
**dadurch gekennzeichnet, daß**
der zweite Mikrocomputer (15) der Signalverarbeitungseinheit (14) einen Unterdatenstrom des MPEG-Transportstroms bezeichnende Steuerdaten zuführt.

23. Vorrichtung nach Anspruch 22,
**dadurch gekennzeichnet, daß**
die den Unterdatenstrom bezeichnenden Steuerdaten im ersten Mikrocomputer (7) generiert werden.

24. Vorrichtung nach Anspruch 22,
**dadurch gekennzeichnet, daß**
die den Unterdatenstrom bezeichnenden Steuerdaten vom Fernbedienempfänger (16) des Zusatzmoduls (12) abgeleitete Steuerdaten sind.

25. Vorrichtung nach einem der vorhergehenden Ansprüche,
**dadurch gekennzeichnet, daß**
das Zusatzmodul (12) in Form eines flachen, diskettenähnlichen Bausteins realisiert ist, welcher durch einen Eingabeschlitz des digitalen Empfangsgerätes in dieses einsteckbar ist und im eingesteckten Zustand mit der Geräteschnittstelle (6) kontaktiert ist.

26. Vorrichtung nach einem der vorhergehenden Ansprüche,
**dadurch gekennzeichnet, daß**
das Zusatzmodul (12) eine Aufnahmevorrichtung (9a) für einen Datenträger aufweist.

27. Vorrichtung nach einem der vorhergehenden Ansprüche,
**dadurch gekennzeichnet, daß**
das digitale Empfangsgerät eine Settop-Box oder ein digitaler Fernsehempfänger ist.

## Claims

1. Apparatus.for receiving digital radio signals, with a digital receiving device (1), having a tuner (4), a demodulator (5) attached to the tuner (4) and a first microcomputer (7), the demodulator (5) and the first microcomputer (7) being connected via a device interface (6) of the digital receiving device (1) to a supplementary module (12), which has a second microcomputer (15), and the supplementary module (12) having at least one further signal output (13, 16), via which signals processed in the supplementary module can be output, **characterised in that** the supplementary module (12) has a signal processing unit (14) which is controlled by the second microcomputer (15) and connected on the output side to the device interface (6) and the first microcomputer (7) generates control data as a reaction to operating commands derived from a remote control receiver (16) of the supplementary module (12) and conducted to the first microcomputer (7) via a code converter for remote control signals.

2. Apparatus according to claim 1, **characterised in that** the supplementary module (12) has several signal outputs.

3. Apparatus according to claim 1 or 2, **characterised in that** a further signal output is an output (16) for infrared signals.

4. Apparatus according to one of the preceding claims, **characterised in that** the signal processing unit (14) shows an audio signal processing unit.

5. Apparatus according to one of the preceding claims, **characterised in that** a further signal output is a digital audio signal output.

6. Apparatus according to one of the preceding claims, **characterised in that** the signal processing unit (14) has a Dolby surround decoder and the supplementary module (12) has two further signal outputs for digital audio signals.

7. Apparatus according to one of the preceding claims, **characterised in that** the signal processing unit (14) has a Dolby surround decoder and the supplementary module (12) has six further signal outputs for analog audio signals.

8. Apparatus according to one of the preceding claims, **characterised in that** the signal processing unit (14) has a protocol converter for audio signals.

9. Apparatus according to one of the preceding claims, **characterised in that** a further output is an output for compressed audio signals.

10. Apparatus according to one of the preceding claims, **characterised in that** a further output is an output for MP3-coded audio signals

11. Apparatus according to one of the preceding claims, **characterised in that** the signal processing unit (14) has a synthesizer.

12. Apparatus according to claim 1, **characterised in that** the supplementary module (12) has a code converter (16) for remote control signals.

13. Apparatus according to one of the preceding claims, **characterised in that** the digital receiving device (1) has a recording device (9a) for a data carrier (9).:

14. Apparatus according to claim 13, **characterised in that** the data carrier (9) is a CD-ROM, an audio CD; a DVD, an MP3 memory card or a semi-conductor memory card.

15. Apparatus according to claim 13 or 14, **characterised in that** the data carrier (9) can be written on.

16. Apparatus according to one of the preceding claims, **characterised in that** the digital receiving device (1) is provided with a telephone interface (19).

17. Apparatus according to one of the preceding claims, **characterised in that** the telephone interface (19) is a modem interface, a DECT interface, radio interface, an infrared interface or a telephone cable connection interface.

18. Apparatus according to one of the preceding claims, **characterised in that** the supplementary module (12) has a further data input (18).

19. Apparatus according to claim 18, **characterised in that** the further data input (18) is a control signal input.

20. Apparatus according to one of the preceding claims, **characterised in that** the data carrier (9) is provided for storing audio and/or video signals derived from the output of the demodulator (5) or from the output of the signal processing unit (14).

21. Apparatus according to one of the preceding claims, **characterised in that** the signals provided at the output of the demodulator (5) correspond to an MPEG transport stream.

22. Apparatus according to claim 21, **characterised in that** the second microcomputer (15) feeds to the signal processing unit (14) control data designating a sub-data stream of the MPEG transport stream.

23. Apparatus according to claim 22, **characterised in that** the control data designating the sub-data stream are generated in the first microcomputer (7).

24. Apparatus according to claim 22, **characterised in that** the control data designating the sub-data stream are control data derived from the remote control receiver (16) of the supplementary module (12).

25. Apparatus according to one of the preceding claims, **characterised in that** the supplementary module (12) is implemented in the form of a flat component, similar to a diskette, which can be inserted into the digital receiving device through an input slot thereof and in the inserted state is contacted by the device interface (6).

26. Apparatus according to one of the preceding claims, **characterised in that** the supplementary module (12) has an accommodating apparatus (9a) for a data carrier.

27. Apparatus according to one of the preceding claims, **characterised in that** the digital receiving device is a set-top box or a digital television receiver.

## Revendications

1. Dispositif de réception de signaux radio numériques, équipé d'un récepteur numérique (1), qui comporte un tuner (4), un démodulateur (5) relié au tuner (4) et un premier micro-ordinateur (7), dans lequel le modulateur (5), le premier micro-ordinateur (7) sont reliés à un module auxiliaire (12) par l'intermédiaire d'une interface (6) du récepteur numérique (1), qui comporte un second micro-ordinateur (15), et le module auxiliaire (12) présente au moins une autre sortie de signal (13, 16), par l'intermédiaire de laquelle des signaux traités peuvent être délivrés au module auxiliaire, **caractérisé en ce que**,
le module auxiliaire (12) possède une unité de traitement de signal (14) commandée par le second micro-ordinateur (15), unité qui est reliée côté sortie à l'interface d'appareillage (6) et le premier micro-ordinateur (7) génère des données de commande en réaction à des commandes, qui sont dérivées d'un récepteur télécommandé (16) du module auxiliaire (12) et sont dirigées vers le premier micro-ordinateur (7) par l'intermédiaire d'un convertisseur de code pour signaux télécommandés.

2. Dispositif selon la revendication 1, **caractérisé en ce que** le module auxiliaire (12) possède plusieurs sorties de signal.

3. Dispositif selon la revendication 1 ou 2, **caractérisé en ce qu'**une autre sortie de signal est une sortie (16) pour des signaux infrarouges.

4. Dispositif selon l'une des revendications précédentes, **caractérisé en ce que** l'unité de traitement de signal (14) est une unité de traitement de signaux audio.

5. Dispositif selon l'une des revendications précédentes, **caractérisé en ce qu'**une autre sortie de signal est une sortie de signal audio numérique.

6. Dispositif selon l'une des revendications précédentes, **caractérisé en ce que** l'unité de traitement de signal (14) possède un décodeur Dolby Surround et le module auxiliaire (12) possède deux autres sorties de signal pour des signaux audio numériques.

7. Dispositif selon l'une des revendications précédentes, **caractérisé en ce que** l'unité de traitement de signal (14) possède un décodeur Dolby Surround et le module auxiliaire (12) possède six autres sorties de signal pour des signaux audio analogiques.

8. Dispositif selon l'une des revendications précédentes, **caractérisé en ce que** l'unité de traitement de signal (14) possède un convertisseur de protocole pour des signaux audio.

9. Dispositif selon l'une des revendications précédentes, **caractérisé en ce qu'**une autre sortie est une sortie pour des signaux audio compressés.

10. Dispositif selon l'une des revendications précédentes, **caractérisé en ce qu'**une autre sortie est une sortie pour des signaux audio codés MP3.

11. Dispositif selon l'une des revendications précédentes, **caractérisé en ce que** l'unité de traitement de signal (14) possède un synthétiseur.

12. Dispositif selon l'une des revendications précédentes, **caractérisé en ce que** le module auxiliaire (12) possède un convertisseur de code (16) pour des signaux télécommandés.

13. Dispositif selon l'une des revendications précédentes, **caractérisé en ce que** le récepteur numérique (1) possède un dispositif de réception (9a) pour un support de données (9).

14. Dispositif selon la revendication 13, **caractérisé en ce que** le support de données (9) est un CD-ROM, un CD audio, un DVD, une carte mémoire MP3 ou une carte mémoire à semiconducteur.

15. Dispositif selon la revendication 13 ou 14,
**caractérisé en ce que** le support de données (9) est inscriptible.

16. Dispositif selon l'une des revendications précédentes, **caractérisé en ce que** le récepteur numérique (1) est équipé d'une interface téléphonique (19).

17. Dispositif selon l'une des revendications précédentes, **caractérisé en ce que** l'interface téléphonique (19) est une interface de modem, une interface DECT, une interface radio, une interface infrarouge ou une interface de connexion téléphonique par câble.

18. Dispositif selon l'une des revendications précédentes, **caractérisé en ce que** le module auxiliaire (12) possède une autre entrée de données (18).

19. Dispositif selon la revendication 18, **caractérisé en ce que** l'autre entrée de données (18) est une entrée de signal de commande.

20. Dispositif selon l'une des revendications précédentes, **caractérisé en ce que** le support de données (9) est prévu pour mémoriser des signaux audio et/ou vidéo, qui proviennent de la sortie du démodulateur (5) ou de la sortie de l'unité de traitement de signal (14).

21. Dispositif selon l'une des revendications précédentes, **caractérisé en ce que** les signaux alloués à la sortie du démodulateur (5) correspondent à un flux de transport MPEG.

22. Dispositif selon la revendication 21, **caractérisé en ce que** le second micro-ordinateur (15) de l'unité de traitement de signal (14) délivre des données de commande désignant un flux de sous-données du flux de transport MPEG.

23. Dispositif selon la revendication 22, **caractérisé en ce que** les données de commande désignant le flux de sous-données sont générées dans le premier micro-ordinateur (7).

24. Dispositif selon la revendication 22, **caractérisé en ce que** les données de commande désignant le flux de sous-données sont des données de commande provenant du récepteur télécommandé (16) du module auxiliaire (12).

25. Dispositif selon l'une de revendications précédentes, **caractérisé en ce que** le module auxiliaire (12) est réalisé sous la forme d'un composant plat analogue à une disquette, qui est insérable par une fente d'introduction du récepteur numérique dans celui-ci et est en contact avec l'interface (6) dans un état inséré.

26. Dispositif selon l'une de revendications précédentes, **caractérisé en ce que** le module auxiliaire (12) possède un dispositif de réception (9a) pour un support de données.

27. Dispositif selon l'une des revendications précédentes, **caractérisé en ce que** le récepteur numérique est une Settop-Box ou un téléviseur numérique.
